# EUROPÄISCHE PATENTANMELDUNG

(11) **EP 1 714 817 A1**
(43) Veröffentlichungstag der Anmeldung: **25.10.2006**
(21) Anmeldenummer: 05103118.5
(22) Anmeldetag: 19.04.2005
(51) Int. Cl.: B60K 6/04

(54) **Hybrid-Doppelkupplungsgetriebe**

(71) Anmelder: Getrag Ford Transmissions GmbH, 50725 Köln (DE)
(72) Erfinder: Eggert, Ulrich, 41751 Viersen (DE); Krauss, Christian, 50737 Köln (DE); Leibbrandt, Martin, 50181 Bedburg (DE)

(57) **Zusammenfassung**

Die Erfindung betrifft ein Doppelkupplungsgetriebe (1) insbesondere für ein Kraftfahrzeug, umfassend
- eine Doppelkupplungsanordnung (2) mit einer ersten Kupplung (3) und einer zweiten Kupplung (4) sowie mit einer Eingangsseite (5) zum Verbinden der Doppelkupplungsanordnung (2) mit einem Motor (6);
- eine erste Eingangswelle (8) und eine zweite Eingangswelle (9), wobei sich die erste Eingangswelle (8) über die erste Kupplung (3) und sich die zweite Eingangswelle (9) über die zweite Kupplung (4) mit dem Motor (6) verbinden lässt;
- wenigstens eine Ausgangswelle;
- mehrere Zahnradpaare zur Verbindung der Eingangswellen (8, 9) mit der wenigstens einen Ausgangswelle, wobei durch ein Zahnradpaar ein Drehmoment zwischen einer der Eingangswellen (8, 9) und der wenigstens einen Ausgangswelle übertragbar ist, wenn eine dem Zahnradpaar zugeordnete Gangschaltkupplung geschlossen ist; und
- wenigstens eine erste Antriebseinheit (7) und eine zweite Antriebeinheit (13).

Das Doppelkupplungsgetriebe (1) zeichnet sich dadurch aus, dass die erste Antriebseinheit (7) mit der Eingangsseite (5) der Doppelkupplungsanordnung (2) verbunden ist und die zweite Antriebseinheit (13) mit einer der Eingangswellen (8, 9) oder mit Ausgangswelle verbunden ist.

## Beschreibung

Die Erfindung betrifft ein Hybrid-Doppelkupplungsgetriebe sowie ein Verfahren zum Steuern dieses Getriebes.

Beispielsweise ist in der DE 198 50 549 A1 ein Hybrid-Doppelkupplungsgetriebe für ein Kraftfahrzeug offenbart. Das Doppelkupplungsgetriebe umfasst eine Doppelkupplungsanordnung mit einer ersten Kupplung und einer zweiten Kupplung sowie mit einer Eingangsseite zum Verbinden der Doppelkupplungsanordnung mit einem Motor. Des weiteren umfasst das Doppelkupplungsgetriebe eine erste Eingangswelle und eine zweite Eingangswelle, die an einer Ausgangsseite der Doppelkupplungsanordnung angeordnet sind.

Durch eine Ausgangswelle kann das Doppelkupplungsgetriebe der DE 198 50 549 A1 mit einem Abtrieb verbunden werden. Zum Verbinden der ersten oder der zweiten Eingangswelle mit der Ausgangswelle sind mehrere Zahnradpaare vorgesehen, durch die ein Drehmoment zwischen einer der Eingangswellen und der Ausgangswelle übertragen werden kann, wenn eine dem jeweiligen Zahnradpaar zugeordnete Gangschaltkupplung geschlossen wird. Des weiteren umfasst das Doppelkupplungsgetriebe eine erste Elektromaschine und eine zweite Elektromaschine, die mit der ersten Eingangswelle bzw. mit der zweiten Eingangswelle verbunden sind. Durch diese Elektromaschinen lassen sich unterschiedlichste Aufgaben erfüllen, wie zum Beispiel das Synchronisieren der Drehzahl einer der Eingangswellen mit der Drehzahl der Ausgangswelle.

Die DE 198 50 549 A1 sieht vor, zum Starten bzw. Anlassen des Motors eine oder beide Elektromaschinen zu verwenden, um somit den sonst üblichen Anlasser einzusparen. Zur Übertragung eines Startdrehmomentes auf die Kurbelwelle des Motors müssen daher, soweit beide Elektromaschinen verwendet werden sollen, beide Kupplungen geschlossen sein.

Bei Doppelkupplungsgetrieben werden jedoch auch hydraulisch betätigte Kupplungen eingesetzt. Die Kupplungen können dabei so ausgelegt sein, dass zum Schließen derselben ein gewisser Hydraulikdruck anliegen muss. Wird jedoch der Hydraulikdruck mit Hilfe des Verbrennungsmotors aufgebaut, können die Kupplungen zum Starten des (noch still stehenden) Verbrennungsmotors nicht verwendet werden. Die in der DE 198 50 549 A1 offenbarte Anordnung der Elektromaschinen kann daher nicht bei allen in Frage kommenden Kupplungstypen zum Starten verwendet werden.

Der Erfindung liegt daher die Aufgabe zugrunde, ein Doppelkupplungsgetriebe mit einer ersten Antriebseinheit und mit einer zweiten Antriebseinheit bereitzustellen, das möglichst viele Einsatzmöglichkeiten dieser Antriebseinheiten bei beliebigen Kupplungstypen erlaubt.

Die der Erfindung zugrunde liegende Aufgabe wird durch das Doppelkupplungsgetriebe mit den Merkmalen des Anspruchs 1 gelöst. Bevorzugte Ausführungsbeispiele können den Unteransprüchen entnommen werden.

Das erfindungsgemäße Doppelkupplungsgetriebe zeichnet sich dadurch aus, dass die erste Antriebseinheit mit der Eingangsseite der Doppelkupplungsanordnung verbunden ist und dass die zweite Antriebseinheit mit einer der Eingangswellen und der wenigstens einen Ausgangswelle verbunden ist. Dies bedeutet, dass die erste Antriebseinheit getriebetechnisch zwischen dem Motor und der Doppelkupplungsanordnung angeordnet ist. Durch eine derartige Anordnung kann die erste Antriebseinheit den Motor anwerfen, auch wenn die beiden Kupplungen geöffnet sind. Somit ist es möglich, auch hydraulisch betätigte Kupplungen zu verwenden, bei denen ein Hydraulikdruck, der üblicherweise mit Hilfe des Motors aufgebaut wird, zum Schließen der Kupplungen benötigt wird. Ein weiterer Vorteil der Anordnung ist, dass die erste Antriebseinheit als zusätzliche Schwungmasse für den Motor genutzt werden kann, wodurch das rotatorische Trägheitsmoment des Motors reduziert werden kann. Auch kann die erste Antriebseinheit so vorteilhaft Drehschwingungen vom Motor dämpfen oder den Leerlauf des Motors bei niedrigen Drehzahlen und geöffneten Kupplungen stabilisieren.

Vorzugsweise ist die zweite Antriebseinheit mit einer der Eingangswellen verbunden. Soll beispielsweise diese zweite Antriebseinheit zum Antrieb der Ausgangswelle verwendet werden, so können die Übersetzungsverhältnisse, die durch die schaltbaren Zahnradpaare zwischen einer der Eingangswellen und der Ausgangswelle vorgegeben sind, genutzt werden. Die zweite Antriebseinheit kann beispielsweise koaxial zur Eingangswelle angeordnet sein, mit einem Zahnrad kämmen, das auf der Eingangswelle sitzt, oder durch ein geschlossenes Zugmittel, wie beispielsweise eine Kette, mit der Eingangswelle verbunden sein.

Wenigstens eine Antriebseinheit umfasst eine Elektromaschine, die sowohl als Elektromotor als auch als Generator betrieben werden kann. Beispielsweise können beide Antriebseinheiten Elektromaschinen umfassen, die gleichzeitig als Elektromotor oder gleichzeitig als Generator eingesetzt werden. Auch ist es möglich, dass eine Antriebseinheit motorisch betrieben wird, während die andere Antriebseinheit als Generator zum Einsatz kommt. Somit lassen sich die Antriebseinheiten unabhängig voneinander steuern.

In einem bevorzugten Ausführungsbeispiel kann wenigstens die zweite Antriebseinheit in zwei entgegen gesetzte Drehrichtungen ein Drehmoment abgeben. So kann die zweite Antriebseinheit einerseits genutzt werden, die mit ihr verbundene Eingangswelle zum Zwecke des Einrückens von Gangschaltkupplungen zu beschleunigen. Andererseits kann ein Rückwärtsfahren des Fahrzeugs durch die Antriebseinheit erfolgen, wobei zur Übertragung des Drehmoments ein Zahnradpaar gewählt wird, das üblicherweise einen Vorwärtsgang bildet. Folglich kann im Doppelkupplungsgetriebe auf einen gesonderten Rückwärtsgang verzichtet werden.

Vorzugsweise kann die erste Antriebseinheit koaxial zur Doppelkupplungsanordnung angeordnet sein. Dabei kann die Antriebseinheit die Doppelkupplungsanordnung zumindest teilweise in radialer Richtung umschließen, so dass die axiale Baulänge des Doppelkupplungsgetriebes nicht oder nur in einem kleinen Maße beeinflusst wird. Die Antriebseinheit kann dabei in einem Kupplungsgehäuse der Doppelkupplungsanordnung untergebracht sein.

Vorzugsweise ist der ersten Eingangswelle ein erstes Teilgetriebe mit ungeraden Vorwärtsgängen und der zweiten Eingangswelle ein zweites Teilgetriebe mit geraden Vorwärtsgängen zugeordnet. Durch eine derartige Aufteilung der Gänge ist ein Schalten zwischen benachbarten Gängen ohne Zugkraftunterbrechung möglich.

In einem bevorzugten Ausführungsbeispiel sind die erste Antriebseinheit und die zweite Antriebseinheit mit einer Batterie verbunden. So lässt sich beispielsweise die Batterie mit Energie speisen, die aus einer generatorisch betriebenen Antriebseinheit stammt, während sie gleichzeitig oder verzögert Energie an die andere Antriebseinheit liefert, die dann als Motor betrieben Energie benötigt. Die beiden Antriebseinheiten können auch direkt miteinander verbunden sein, wobei die eine Antriebseinheit generatorisch und die zweite Antriebseinheit motorisch arbeitet.

In einem Ausführungsbeispiel liegt eine Leistung der ersten Antriebseinheit zwischen 10 und 40 kW und beträgt vorzugsweise ca. 25 kW. Durch eine derartige Leistung kann unter Berücksichtigung von Verlusten ein Fahrzeug, in das das Doppelkupplungsgetriebe eingebaut ist, aus dem Stand beschleunigt oder ausreichend schnell rückwärts bewegt werden.

Ein bevorzugtes Verfahren zur Steuerung des erfindungsgemäßen Doppelkupplungsgetriebes ist dadurch gekennzeichnet, dass beim Starten des Motors die erste Kupplung und die zweite Kupplung geöffnet wird, sofern diese sich in einem geschlossenen Zustand befinden. Danach erfolgt das Anwerfen des Motors durch die erste Antriebseinheit.

Ein alternatives Verfahren zum Starten des Motors sieht vor, dass der Motor durch die erste Antriebseinheit und die zweite Antriebseinheit gleichzeitig angeworfen wird. Dadurch steht zum Starten des Motors eine höhere Leistung zur Verfügung, was insbesondere beim Kaltstart des Motors aufgrund der dann erhöhten Schleppmomente von Vorteil ist. Zudem kann durch die gleichzeitige Nutzung der Antriebseinheiten zum Anwerfen des Motors die erste Antriebseinheit kleiner dimensioniert werden.

Um auch die zweite Antriebseinheit beim Starten des Motors verwenden zu können, müssen alle Gangschaltkupplungen der Zahnradpaare, die dem zweiten Teilgetriebe zugeordnet sind, geöffnet werden. Dadurch kann die zweite Eingangswelle durch die zweite Antriebseinheit angetrieben werden, auch wenn die wenigstens eine Ausgangswelle durch den Stillstand des Kraftfahrzeugs sich nicht dreht. Zur Übertragung des Drehmoments von der zweiten Antriebseinheit über die zweite Eingangswelle auf den Motor wird die zweite Kupplung geschlossen. Somit stehen die erste Antriebseinheit und die zweite Antriebseinheit mit dem Motor in Eingriff. Ein Anwerfen des Motors durch beide Antriebseinheiten kann erfolgen.

Im Anschluss an das Anwerfen des Motors kann der Leerlauf auch bei geöffneten Kupplungen durch die erste Antriebseinheit stabilisiert werden. Dadurch sind deutlich kleinere Leerlaufdrehzahlen möglich als im unstabilisierten Betrieb.

Je nach Momentenanforderung kann entweder mit der zweiten Antriebseinheit oder mit einer der Kupplungen oder mit beiden das Kraftfahrzeug beschleunigt werden. Dabei kann auch die erste Antriebseinheit auf der Eingangsseite der Doppelkupplungsanordnung unterstützend eingreifen.

In dem Fall, dass der Motor noch nicht läuft (z.B. um Energie zu sparen), kann das Kraftfahrzeug durch die zweite Antriebseinheit bewegt werden, während der Motor durch die Antriebeinheit auf der Eingangsseite der Doppelkupplungsanordnung gestartet wird. Im Anschluss an das Ankuppeln des Motors kann dieser bei dem Anfahrvorgang durch beide Antriebseinheiten gleichzeitig unterstützt werden. Durch dieses Verfahren kann ohne die sonst üblichen Verzögerungen beim Anfahren eine Start/Stop-Strategie implementiert werden.

Das Getriebe kann wie ein gewöhnliches (ohne Antriebseinheiten ausgestattetes) Doppelkupplungsgetriebe ohne Zugkraftunterbrechung geschaltet werden. Zusätzlich kann der Schaltvorgang durch die Antriebseinheiten unterstützt werden, in dem zum Beispiel die zweite Antriebseinheit verwendet wird, um das Drehmoment während der Schaltung aufzufüllen. Alternativ oder zusätzlich kann die erste Antriebeinheit an der Eingangsseite der Doppelkupplungsanordnung zur Anpassung der Drehzahl des Motors an die Eingangswellendrehzahl beitragen. Auch kann die zweite Antriebseinheit an der zweiten Eingangswelle dazu verwendet werden, die Gangdrehzahlen zu synchronisieren, wodurch die Gangschaltkupplungen in diesem Teilgetriebe als einfache Klauenkupplungen ausgelegt werden können.

Anhand der in den Figuren dargestellten Ausführungsbeispiele soll die Erfindung näher erläutert werden. Es zeigen:
- Figur 1: ein Antriebsschema eines Ausführungsbeispiels; und
- Figur 2: ein Doppelkupplungsgetriebe als 6-Gang-Getriebe.

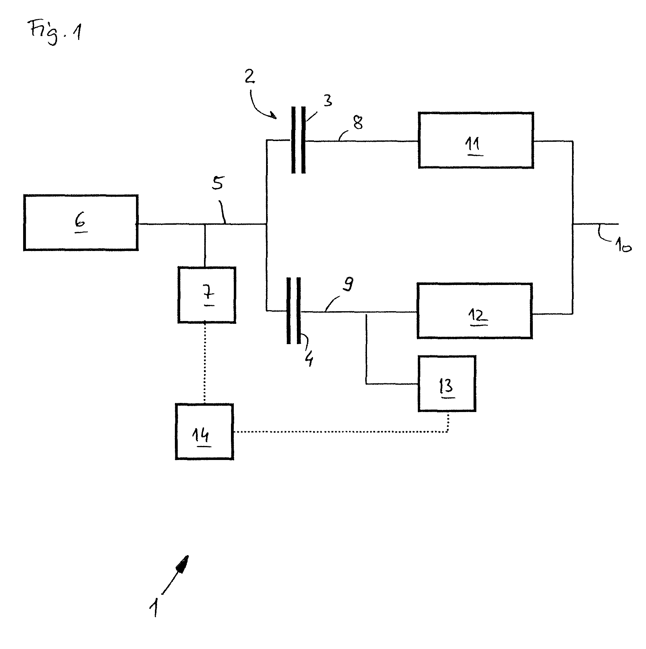

Figur 1 zeigt ein Antriebsschema eines Doppelkupplungsgetriebes, das in seiner Gesamtheit mit 1 bezeichnet wird und beispielsweise als automatisiertes Schaltgetriebe in einem Kraftfahrzeug eingesetzt werden kann. Eine Doppelkupplungsanordnung 2 umfasst eine erste Kupplung 3 und eine zweite Kupplung 4. An einer Eingangsseite 5 der Doppelkupplungsanordnung 2 ist ein Motor 6 angeschlossen. Zwischen dem Motor 6 und der Doppelkupplungsanordnung 2 ist eine erste Antriebseinheit 7 vorgesehen. Entsprechend ist die erste Antriebseinheit 7 mit der Eingangsseite 5 der Doppelkupplungsanordnung 2 verbunden, so dass ein Drehmoment der ersten Antriebseinheit 7 auf die Eingangsseite 5 der Doppelkupplungsanordnung 2 übertragen werden kann.

Der ersten Kupplung 3 ist eine erste Eingangswelle 8 zugeordnet. Bei geschlossener erster Kupplung 3 wird ein Drehmoment des Motors und/oder der ersten Antriebseinheit 7 somit auf die erste Eingangswelle 8 übertragen. Entsprechend findet eine Drehmomentübertragung vom Motor 6 bzw. von der ersten Antriebseinheit auf eine zweite Eingangswelle 9 statt, wenn die der zweiten Eingangswelle 9 zugeordnete zweite Kupplung 4 geschlossen wird.

Zwischen der ersten Eingangswelle 8 und einem Abtrieb 10 ist ein erstes Teilgetriebe 11 angeordnet, durch das verschiedene Übersetzungen zwischen Eingangswelle 8 und Abtrieb 10 realisiert werden können. Eine Übersetzung wird dabei durch ein Zahnradpaar mit einem Losrad und einem Festrad festgelegt. Jedem Losrad ist dabei eine Gangsschaltkupplung zugeordnet. Ist die Gangschaltkupplung eines Losrads geschlossen, überträgt das betreffende Zahnradpaar ein Drehmoment zwischen der ersten Eingangswelle 8 und dem Abtrieb 10.

Weitere Übersetzungsverhältnisse werden durch ein zweites Teilgetriebe 12 ermöglicht, das zwischen der zweiten Eingangswelle 9 und dem Abtrieb 10 vorgesehen ist und, analog zum ersten Teilgetriebe 11, mehrere Zahnradpaare mit Gangschaltkupplungen aufweist.

Eine zweite Antriebseinheit 13 steht mit der zweiten Eingangswelle 9 in Eingriff. Die zweite Antriebseinheit 13 ist dabei, von der Eingangsseite 5 betrachtet, hinter der zweiten Kupplung 4 angeordnet. Durch eine geöffnete Kupplung 4 folglich sind Antriebseinheit 13 und Motor 6 voneinander getrennt.

Eine Batterie 14 verbindet die erste Antriebseinheit 7 mit der zweiten Antriebseinheit 13. Die erste und zweite Antriebseinheit 7, 13 umfassen jeweils eine Elektromaschine, die beide als Elektromotor oder als Generator eingesetzt werden können. Die Batterie ermöglicht dabei eine Weiterleitung, Aufnahme, Speicherung und Abgabe von elektrischer Energie, die von den Antriebseinheiten 7, 13 erzeugt bzw. benötigt wird.

Anhand einiger ausgewählter Fahrzustände wird das Verfahren zum Betreiben des Doppelkupplungsgetriebes 1 beschrieben.

Steht der Motor 6 still, so kann dieser durch die erste Antriebseinheit 7 auf dessen Anlassdrehzahl beschleunigt werden. Dabei ist zumindest die erste Kupplung 3 geöffnet, so dass das erste Teilgetriebe 11 von der Eingangsseite 5 der Doppelkupplungsanordnung 2 getrennt ist. Zur Unterstützung der ersten Antriebseinheit 7 kann zum Starten des Motors 6 die zweite Antriebseinheit 13 herangezogen werden. In diesem Fall ist die zweite Kupplung 4 geschlossen, damit das Drehmoment der zweiten Antriebseinheit 13 über die zweite Eingangswelle 9 auf den Motor 6 übertragen werden kann. Damit eine Rotation der zweiten Eingangswelle 9 auch bei stillstehendem Kraftfahrzeug bzw. stillstehendem Abtrieb 10 möglich ist, müssen die dem zweiten Teilgetriebe zugeordneten Gangschaltkupplungen geöffnet sein. In diesem Fall wird zwischen der zweiten Eingangswelle 9 und dem Abtrieb kein Drehmoment übertragen.

Beim Anlassen des Motors 6 muss die erste Kupplung 3 nicht zwangsläufig geöffnet sein. Es ist auch möglich, die notwendige Trennung zwischen dem stillstehenden Abtrieb 10 und der dann mitdrehenden Eingangswelle 8 dadurch zu erreichen, dass die dem ersten Teilgetriebe 11 zugeordneten Gangschaltkupplungen allesamt geöffnet sind. Dies hat jedoch gegenüber einer geöffneten ersten Kupplung 3 den Nachteil, dass beim Starten des Motors 6 ein gewisser Teil der Leistung der ersten Antriebseinheit 7 und der zweiten Antriebseinheit 13 für das Drehen der ersten Eingangswelle 8 verbraucht wird.

Nach dem Anlassen des Motors 6 kann der Leerlauf durch Ansteuerung der ersten Antriebseinheit 7 auch bei geöffneten Kupplungen 3 und 4 stabilisiert werden, indem die Antriebseinheit 7 so angesteuert wird, dass sie den periodischen Momentenschwankungen des Motors 6 entgegenwirkt und somit die Drehzahl des Motors 6 auf einen festgelegten Wert einregelt.

Das Anfahren des mit dem Doppelkupplungsgetriebe 1 ausgestatteten Kraftfahrzeugs kann auf verschiedene Weise erfolgen. So kann beispielsweise bei geöffneter erster Kupplung 3 und bei geöffneter zweiter Kupplung 4 ein Anfahren lediglich über die zweite Antriebseinheit 13 und über das zweite Teilgetriebe 12 erfolgen. Dabei kann der Motor 6, der beispielsweise aus Energiespargründen stillsteht, durch die erste Antriebseinheit 7 auf seine Anlassdrehzahl beschleunigt und gestartet werden. Danach kann die zweite Kupplung 4 geschlossen werden, wodurch dann das Drehmoment des Motors 6, der ersten Antriebseinheit 7 und der zweiten Antriebseinheit 13 zum weiteren Beschleunigen des Fahrzeugs genutzt werden kann.

Alternativ ist auch möglich, die erste Kupplung 3 als Anfahrkupplung einzusetzen, durch die das Drehmoment des Motors 6 und ggf. der ersten Antriebseinheit 7 über die erste Eingangswelle und über das erste Teilgetriebe 11 auf den Abtrieb 10 geleitet wird. Aufgrund einer Entkoppelung, die durch eine geöffnete zweite Kupplung 4 gegeben ist, kann die Drehgeschwindigkeit der zweiten Eingangswelle 9 unter Berücksichtigung der gewählten Übersetzung im zweiten Teilgetriebe 12 so gewählt werden, dass ein gleichzeitiges Antreiben des Abtriebs möglich ist, wobei dann die Drehzahlen der beiden Eingangswellen unterschiedlich sind.

Ein Bewegen des Fahrzeuges mit sehr kleiner Geschwindigkeit (Kriechen oder ein Fahren im so genannten Creep-Modus) kann durch die zweite Antriebseinheit 13 erfolgen. Dadurch wird die thermische Belastung der Kupplung minimiert, die ansonsten für das Anfahren verwendet wird. Wie oben bereits beschrieben, kann sowohl die erste Kupplung 3 als auch die zweite Kupplung 4 zum Anfahren des Kraftfahrzeugs eingesetzt werden.

Das Rückwärtsfahren des Kraftfahrzeugs kann ebenfalls mit Hilfe der zweiten Antriebseinheit 13 durchgeführt werden. Dabei dreht sich die zweite Antriebseinheit 13 in eine entgegen gesetzte Drehrichtung, so dass bei einem im zweiten Teilgetriebe 12 geschalteten Vorwärtsgang sich eine entgegen gesetzte Drehrichtung des Abtriebs 10 einstellt. Die Energie, die die zweite Antriebseinheit 13 beim Rückwärtsfahren des Kraftfahrzeugs benötigt, kann durch die erste Antriebseinheit 7 generiert und über die Batterie 14 an die zweite Antriebseinheit 13 geleitet werden.

Das Halten des Kraftfahrzeugs am Berg kann entweder über die Kupplungen 3, 4 erfolgen oder aber über die zweite Antriebseinheit an der zweiten Eingangswelle 9.

Durch die Antriebseinheiten 7, 13, die vorzugsweise jeweils eine Elektromaschine umfassen, kann ein Teil der im Fahrzeug gespeicherten kinetischen Energie beim Bremsen wieder gewonnen werden. Diese kann in einen Kurzzeitspeicher (nicht dargestellt) oder in die Batterie 14 eingespeist werden, um bei der nächsten Beschleunigungsphase den Motor zu unterstützten. Dabei kann beim Bremsen nur die zweite Antriebseinheit 13 an der zweiten Eingangswelle 9 verwendet werden, während der Motor 6 mit der ersten Antriebseinheit 7 bei geöffneten Kupplungen 3, 4 angehalten wird. Auch kann bei erhöhter Anforderung an das Bremsmoment das Kraftfahrzeug zusätzlich mit dem Schleppmoment des Motors 6 oder zusätzlich noch durch die erste Antriebseinheit 7 verzögert werden.

Dabei kann der Übergang von dem einen Betriebszustand in den anderen fließend erfolgen, indem der Motor 6 durch das Schließen einer Kupplung 3, 4 angeschleppt wird. Hier kann die erste Antriebseinheit 7 bei minimalem Energieeinsatz (oder sogar Energiegewinnung) dazu verwendet werden, die dabei auftretenden Antriebsstrangschwingungen zu dämpfen und so einen ruhigen Motorstart zu ermöglichen.

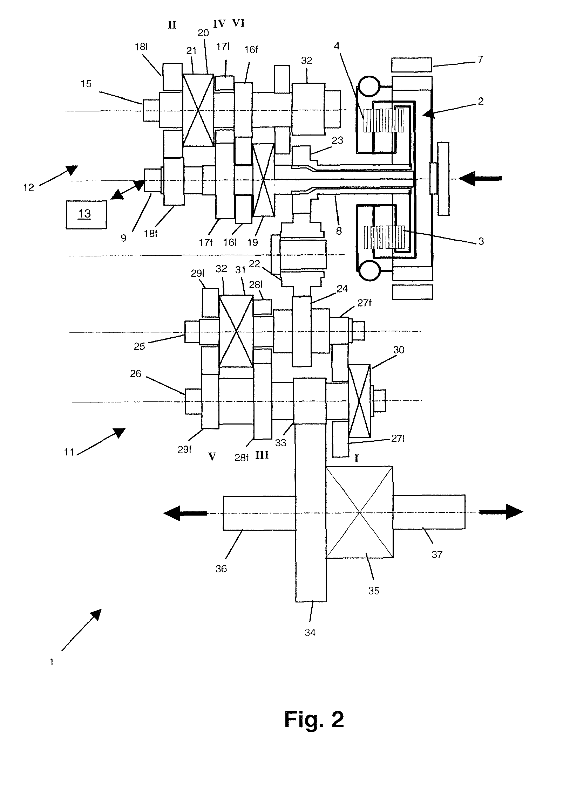

Figur 2 zeigt ein Ausführungsbeispiel der Erfindung mit 6 Vorwärtsgängen I, II, ..., Vl. In der Figur 2 werden Bauteile, die mit den in Figur 1 beschriebenen Bauteilen identisch oder vergleichbar sind, mit gleichen Bezugsziffern versehen. Wie zu erkennen ist, sind die erste Eingangswelle 8 und die zweite Eingangswelle 9 koaxial zueinander angeordnet, wobei die erste Eingangswelle 8 als Hohlwelle ausgebildet ist.

Das der zweiten Eingangswelle 9 zugeordnete zweite Teilgetriebe 12 weist eine Ausgangswelle 15 und drei Zahnradpaare 16, 17, 18 auf. Jedes Zahnradpaar umfasst dabei ein Festrad 16f, 17f, 18f und ein Losrad 16l, 17l, 18l. Dabei sind die Losräder 17l, 18l auf der Ausgangswelle 15 angeordnet, während das Losrad 16l auf der zweiten Eingangswelle 9 sitzt. Durch den einzelnen Losrädern zugeordnete Gangschaltkupplungen 19, 20, 21 lassen sich die jeweiligen Losräder drehfest mit der sie tragenden Welle verbinden. Die Gangschaltkupplungen 19, 20, 21 sind hier nur stark schematisiert als Rechtecke mit eingezeichneten Diagonalen dargestellt.

Das erste Teilgetriebe 11 ist durch ein Zwischenzahnrad 22 räumlich von dem zweiten Teilgetriebe 12 getrennt. Dieses Zwischenzahnrad 22 kämmt mit einem Zahnrad 23, das drehfest mit der ersten Eingangswelle 8 verbunden ist. Des weiteren kämmt das Zwischenzahnrad 22 mit einem Zahnrad 24 auf einer Zwischenwelle 25. Das Zahnrad 24 ist dabei drehfest mit der Zwischenwelle 25 verbunden. Eine Drehmomentübertragung von der Zwischenwelle 25 auf eine weitere Ausgangswelle 26 kann über drei Zahnradpaare 27, 28, 29 erfolgen. Wie auch im zweiten Teilgetriebe 12 weist jedes Zahnradpaar 27, 28, 29 ein Losrad 271, 281, 291 und ein Festrad 27f, 28f, 29f auf. Um das Losrad 271 drehfest mit der Ausgangswelle 26 zu verbinden, ist eine Gangschaltkupplung 30 vorgesehen. Gangschaltkupplungen 31 und 32 sorgen für eine drehfestere Verbindung der Losräder 28l, 29l mit der Zwischenwelle 25.

Auf den Ausgangswellen 15, 26 sitzt jeweils drehfest ein Zahnrad 32, 33, das mit einem großen Zahnrad oder Ringzahnrad 34 kämmt. Das große Zahnrad 34 treibt ein Differential 35 an, das das anliegende Drehmoment auf die Achsen 36, 37 verteilt.

Die erste Antriebseinheit 7 ist koaxial zu den Eingangswellen 8, 9 angeordnet und umgreift in radialer Richtung die Doppelkupplungsanordnung 2. Die zweite Antriebseinheit 13 steht in Wirkverbindung mit der zweiten Eingangswelle 9 und kann beispielsweise mit einer Kette oder dergleichen (nicht dargestellt) mit der zweiten Eingangswelle 9 verbunden sein. Die Verbindung ist durch einen Doppelpfeil hier nur angedeutet. Die Antriebseinheit 13 kann alternativ auch durch eine Stirnradstufe mit der zweiten Eingangswelle 9 verbunden sein. Ein Zahnrad der Stirnradstufe kann ein Festrad der Eingangswelle 9 oder ein mit der Eingangswelle 9 in Wirkverbindung stehendes Losrad sein.

Durch jedes Zahnradpaar 16, 17, 18, 27, 28, 29 wird ein Vorwärtsgang festgelegt, wobei jeweils ein Vorwärtsgang durch eine römische Ziffer bezeichnet wird. Beispielsweise ist der zweite Vorwärtsgang II eingelegt, wenn die Gangschaltkupplung 21 geschlossen ist und das Zahnradpaar 18, bestehend aus dem Festrad 18f und dem Losrad 18l, dann ein Drehmoment zwischen den Wellen 9, 15 übertragen kann.

Das Verfahren zur Steuerung des erfindungsgemäßen Doppelkupplungsgetriebes 1 soll auch hier wieder durch einige Fahrzustände verdeutlicht werden.

Ist beispielsweise der erste Vorwärtsgang I eingelegt, befindet sich die Gangschaltkupplung 30 in einem geschlossenen Zustand, wodurch das Losrad 27l drehfest mit der Ausgangswelle 26 verbunden ist. Um nun im ersten Vorwärtsgang I anzufahren, wird die erste Kupplung 3 geschlossen, wobei das Drehmoment des Motors 6 und ggf. das Drehmoment der ersten Antriebseinheit 7 auf die erste Eingangswelle 8 geleitet wird. Über das Zahnrad 23, das Zwischenzahnrad 22, die Zwischenwelle 25 mit dem Zahnrad 24 wird das Drehmoment auf das Festrad 27f geleitet, das mit dem Losrad 27l kämmt. Aufgrund der geschlossenen Gangschaltkupplung 30 wird das Drehmoment über die Ausgangswelle 26 auf das Zahnrad 33 und somit letztlich über das Zahnrad 34, das Differential 35 auf die Achsen 36, 37 übertragen. Alternativ kann die Eingangswelle 25 durch die Antriebseinheit 13 bei geöffneter Kupplung 3 mit Moment beaufschlagt werden, welches dann über das Festrad 27f geleitet wird, das mit dem Losrad 27l kämmt. Über die geschlossene Gangschaltkupplung 30 wird das Drehmoment dann über die Ausgangswelle 26 auf das Zahnrad 33 und somit wieder über das Zahnrad 34, das Differential 35 auf die Achsen 36 und 37 übertragen. Die zur Erzeugung des Drehmomentes der Antriebsmaschine 13 notwendige Energie kann dabei entweder aus der Batterie 14 oder von der Antriebseinheit 7 entnommen werden, wobei die Antriebseinheit 7 durch den Motor 6 angetrieben werden kann.

Um nun zum Beispiel vom zweiten in den dritten Vorwärtsgang zu schalten, wird bei geöffneter Kupplung 3 und bei weiterhin geschlossener Kupplung 4 die Gangschaltkupplung 31 geschlossen. Um die Gangschaltkupplung 31 schließen zu können, muss die Drehzahl der Eingangswelle 25 auf die Drehzahl der Ausgangswelle synchronisiert werden. Dies kann über konventionelle Synchronisationseinheiten oder auch (ausschließlich) über die zweite Antriebseinheit 13 erfolgen.

Ist der dritte Gang eingelegt, kann in überschneidender Weise die zweite Kupplung 4 geöffnet und die erste Kupplung 3 geschlossen werden. Dabei kann die zweite Antriebseinheit zumindest teilweise das an der Ausgangswelle 26 benötigte Drehmoment aufbringen. Auch kann die erste Antriebseinheit 7 eingesetzt werden, in der Überschneidungsphase der beiden Kupplungen die Drehzahlen von Motor 6 und zweiter Eingangswelle 25 schneller aneinander anzupassen.

Auch kann bereits auch schon bei geöffneter erster Kupplung 3 die zweite Antriebseinheit 13 Drehmoment zur Verfügung stellen, wodurch ein Beschleunigen des Fahrzeugs über den Motor 6 mit dem zweiten Vorwärtsgang II unterstützt wird.

### Bezugszeichenliste

- 1: Doppelkupplungsgetriebe
- 2: Doppelkupplungsanordnung
- 3: 1. Kupplung
- 4: 2. Kupplung
- 5: Eingangsseite
- 6: Motor
- 7: 1. Antriebseinheit
- 8: 1. Eingangswelle
- 9: 2. Eingangswelle
- 10: Abtrieb
- 11: 1. Teilgetriebe
- 12: 2. Teilgetriebe
- 13: 2. Antriebseinheit
- 14: Batterie
- 15: Ausgangswelle
- 16: Zahnradpaar
- 17: Zahnradpaar
- 18: Zahnradpaar
- 19: Gangschaltkupplung
- 20: Gangschaltkupplung
- 21: Gangschaltkupplung
- 22: Zwischenzahnrad
- 23: Zahnrad
- 24: Zahnrad
- 25: Zwischenwelle
- 26: Ausgangswelle
- 27: Zahnradpaar
- 28: Zahnradpaar
- 29: Zahnradpaar
- 30: Gangschaltkupplung
- 31: Gangschaltkupplung
- 32: Zahnrad
- 33: Zahnrad

- 34: Großes Zahnrad
- 35: Differential
- 36: Achse
- 37: Achse

## Patentansprüche

**1.** Doppelkupplungsgetriebe (1) insbesondere für ein Kraftfahrzeug, umfassend
- eine Doppelkupplungsanordnung (2) mit einer ersten Kupplung (3) und einer zweiten Kupplung (4) sowie mit einer Eingangsseite (5) zum Verbinden der Doppelkupplungsanordnung (2) mit einem Motor (6);
- eine erste Eingangswelle (8) und eine zweite Eingangswelle (9), wobei sich die erste Eingangswelle (8) über die erste Kupplung (3) und sich die zweite Eingangswelle (9) über die zweite Kupplung (4) mit dem Motor (6) verbinden lässt;
- wenigstens eine Ausgangswelle;
- mehrere Zahnradpaare zur Verbindung der Eingangswellen (8, 9) mit der wenigstens einen Ausgangswelle, wobei durch ein Zahnradpaar ein Drehmoment zwischen einer der Eingangswellen (8, 9) und der wenigstens einen Ausgangswelle übertragbar ist, wenn eine dem Zahnradpaar zugeordnete Gangschaltkupplung geschlossen ist; und
- wenigstens eine erste Antriebseinheit (7) und eine zweite Antriebeinheit (13)
**dadurch gekennzeichnet, dass**
die erste Antriebseinheit (7) mit der Eingangsseite (5) der Doppelkupplungsanordnung (2) verbunden ist und die zweite Antriebseinheit (13) mit einer der Eingangswellen (8, 9) oder mit der wenigstens einen Ausgangswelle verbunden ist.

**2.** Doppelkupplungsgetriebe (1) nach Anspruch 1, **dadurch gekennzeichnet, dass** wenigstens eine Antriebseinheit (7, 13) eine Elektromaschine umfasst.

**3.** Doppelkupplungsgetriebe (1) nach Anspruch 1 oder 2, **dadurch gekennzeichnet, dass** die Elektromaschine als Motor und Generator einsetzbar ist.

**4.** Doppelkupplungsgetriebe (1) nach einem der Ansprüche 1 bis 3, **dadurch gekennzeichnet, dass** wenigstens die zweite Antriebseinheit (13) in zwei entgegen gesetzte Drehrichtungen ein Drehmoment abgeben kann.

**5.** Doppelkupplungsgetriebe (1) nach einem der Ansprüche 1 bis 4, **dadurch gekennzeichnet, dass** die erste Antriebseinheit (7) koaxial zur Doppelkupplungsanordnung (2) angeordnet ist.

**7.** Doppelkupplungsgetriebe (1) nach einem der Ansprüche 1 bis 6, **dadurch gekennzeichnet, dass** die erste Antriebseinheit (7) die Doppelkupplungsanordnung (2) zumindest teilweise in radialer Richtung umschließt.

**8.** Doppelkupplungsgetriebe (1) nach einem der Ansprüche 1 bis 7, **dadurch gekennzeichnet, dass** der ersten Eingangswelle (8) ein erstes Teilgetriebe (11) mit Zahnradpaaren für ungerade Vorwärtsgänge und der zweiten Eingangswelle (9) ein zweites Teilgetriebe (12) mit Zahnradpaaren für gerade Vorwärtsgängen zugeordnet ist.

**9.** Doppelkupplungsgetriebe (1) nach einem der Ansprüche 1 bis 8, **dadurch gekennzeichnet, dass** die erste Antriebseinheit (7) und die zweite Antriebseinheit (13) mit einer Batterie (14) verbunden sind.

**10.** Doppelkupplungsgetriebe (1) nach einem der Ansprüche 1 bis 9, **dadurch gekennzeichnet, dass** die Leistung der ersten Antriebseinheit (7) zwischen 15 und 35 kW liegt und vorzugsweise ca. 25 kW beträgt.

**11.** Verfahren zur Steuerung des Doppelkupplungsgetriebes (1) nach einem der Ansprüche 1 bis 10, **dadurch gekennzeichnet, dass** beim Starten des Motors folgende Verfahrensschritte vorgesehen sind:
- Trennen der ersten Kupplung (3) und der zweiten Kupplung (4), sofern diese geschlossen sind; und
- Anwerfen des Motors (6) durch die erste Antriebseinheit (7).

**12.** Verfahren zur Steuerung des Doppelkupplungsgetriebes (1) nach einem der Ansprüche 1 bis 10, **dadurch gekennzeichnet, dass** beim Starten des Motors (6) folgende Verfahrensschritte vorgesehen sind:
- Öffnen aller Gangschaltkupplungen der Zahnradpaare des mit der zweiten Antriebseinheit 13 verbundenen ersten oder zweiten Teilgetriebes (11,12);
- Schließen der mit der zweiten Antriebseinheit 13 verbundenen ersten oder zweiten Kupplung (3,4), sofern diese geöffnet ist, so dass das zugeordnete Teilgetriebe (11,12) mit dem Motor (6) verbunden ist;
- Anwerfen des Motors (6) durch die erste Antriebseinheit (7) und die zweite Antriebseinheit (13).

**13.** Verfahren nach Anspruch 11 oder 12, **dadurch gekennzeichnet, dass** der Motor (6) im Leerlauf durch die erste Antriebseinheit (7) stabilisiert wird.

**14.** Verfahren nach einem der Ansprüche 11 bis 13, **dadurch gekennzeichnet, dass** mit einer der Kupplungen und/oder mit der zweiten Antriebseinheit (13) das Kraftfahrzeug aus dem Stand beschleunigt wird.

**15.** Verfahren nach Anspruch 14, **dadurch gekennzeichnet, dass** die erste Antriebseinheit (7) beim Beschleunigen des Fahrzeugs aus dem Stand ein Drehmoment abgibt.

**16.** Verfahren nach einem der Ansprüche 11 bis 15, **dadurch gekennzeichnet, dass** beim Schalten von einem der ersten Eingangswelle (8) zugeordneten Quellgang in einen der zweiten Eingangswelle (9) zugeordneten Zielgang folgende Verfahrensschritte vorgesehen sind:
- Beschleunigen oder Abbremsen der zweiten Eingangswelle (8) auf eine Synchrondrehzahl entsprechend der dem Zielgang zugeordneten Gangschaltkupplung:
- Schließen der dem Zielgang zugeordneten Gangsschaltkupplung; und
- Öffnen der ersten Kupplung (3) und Schließen der zweiten Kupplung (4).

**17.** Verfahren nach Anspruch 16, **dadurch gekennzeichnet, dass** das Beschleunigen oder Abbremsen der zweiten Eingangswelle (9) auf die Synchrondrehzahl durch die zweite Antriebseinheit (13) erfolgt.

**18.** Verfahren nach Anspruch 16 oder 17, **dadurch gekennzeichnet, dass** nach Schließen der dem Zielgang zugeordneten Gangschaltkupplung die zweite Antriebseinheit (13) wenigstens zum Teil das an der Ausgangswelle anliegende Drehmoment übernimmt.

**19.** Verfahren nach einem der Ansprüche 16 bis 18, **dadurch gekennzeichnet, dass** die erste Antriebseinheit (7) die Anpassung der Drehzahl des Motors (6) an die Drehzahl der zweiten Eingangswelle (9) unterstützt.
